# EUROPEAN PATENT APPLICATION

(11) **EP 4 487 965 A1**
(43) Date of publication of application: **08.01.2025**
(21) Application number: 23900995.4
(22) Date of filing: 28.11.2023
(51) Int. Cl.: B05C 5/02, B05C 11/10, H01M 4/04

(54) **SHIM PLATE AND SLOT DIE COATER COMPRISING SAME**

(30) Priority: 09.12.2022 KR 20220171222; 19.01.2023 KR 20230008348; 26.07.2023 KR 20230097672
(71) Applicant: LG Energy Solution, Ltd., Seoul 07335 (KR)
(72) Inventor: KIM, Gue-Hyung, Daejeon 34122 (KR); KIM, Bo-Hyun, Daejeon 34122 (KR); RYU, Sang-Su, Daejeon 34122 (KR); JEONG, Da-Hye, Daejeon 34122 (KR)
(74) Representative: Plasseraud IP
(86) International application number: PCT/KR2023/019307
(87) International publication number: WO 2024/122976

(57) **Abstract**

Provided are a shim plate capable of improving a loading deviation in the electrode coating width direction and a slot die coater including the same. A shim plate of the present disclosure is provided between a lower die block and an upper die block of a slot die coater to form a slot and to discharge a coating liquid through an outlet communicating with the slot, and the shim plate includes a plurality of protruding parts so as to have a plurality of openings by intermittently cutting one area, and a blocking part partially blocking a space between the protruding parts.

## Description

### TECHNICAL FIELD

The present disclosure relates to a shim plate and a slot die coater including the same, and more specifically, to a shim plate capable of improving a loading deviation in the electrode coating width direction and a slot die coater including the same. The present application claims priority to Korean Patent Application No. 10-2022-0171222 filed on December 9, 2022, Korean Patent Application No. 10-2023-0008348 filed on January 19, 2023, and Korean Patent Application No. 10-2023-0097672 filed on July 26, 2023 in the Republic of Korea, the disclosures of which are incorporated herein by reference.

### BACKGROUND ART

As the technology development and demand for mobile devices increase, demand for secondary batteries as an energy source is rapidly increasing. These secondary batteries essentially include an electrode assembly, which is a power generation element. The electrode assembly has a form in which a positive electrode, a separator, and a negative electrode are stacked at least once, and the positive electrode and the negative electrode are prepared by applying a positive electrode active material slurry and a negative electrode active material slurry to a current collector made of aluminum foil and copper foil, respectively, and drying. In order to ensure uniform charge/discharge characteristics of secondary batteries, the positive electrode active material slurry and the negative electrode active material slurry should be evenly coated on a current collector, and conventionally, a slot die coater is used.

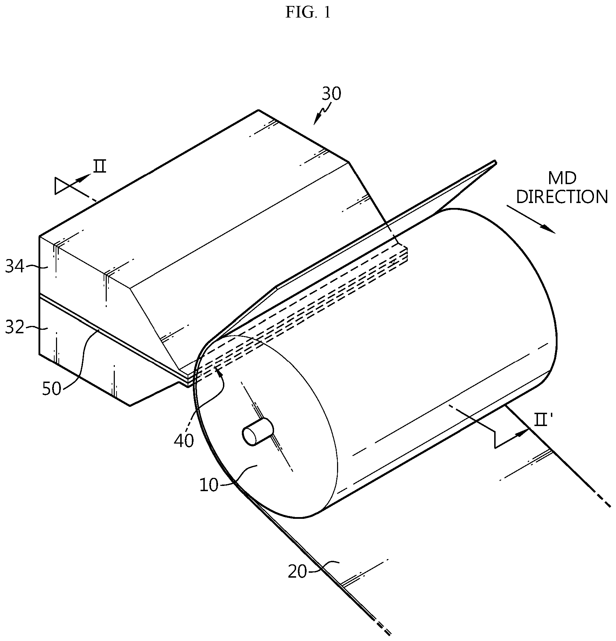

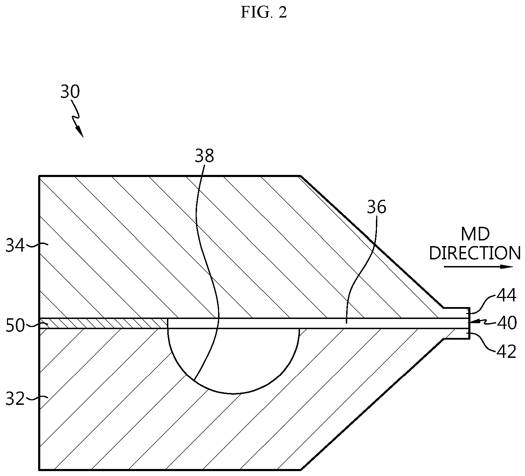

FIG. 1 shows an example of a coating method using a conventional slot die coater. FIG. 2 is a cross-sectional view taken along line II-II' of FIG. 1 and is a cross-sectional view of the slot die coater along the MD direction (the driving direction of a current collector).

Referring to FIGS. 1 and 2, in the electrode manufacturing method using the slot die coater 30, the electrode active material slurry discharged from the slot die coater 30 is applied onto the current collector 20 transferred by the coating roll 10. The electrode active material slurry discharged from the slot die coater 30 is widely applied to one surface of the current collector 20 to form an electrode active material layer. The slot die coater 30 includes two die blocks 32, 34 and forms a slot 36 between the two die blocks 32, 34, wherein a manifold 38 receives the electrode active material slurry supplied from a feed portion (not shown) and then the electrode active material slurry is discharged through the outlet 40 communicating with the slot 36 to form an electrode active material layer. Reference numerals 42, 44 indicate die lips, which are the respective front ends of the die blocks 32, 34.

The coating width of the electrode active material layer coated on the current collector 20 is determined by the width of the slot 36. If the coating width needs to be changed, various coating widths may be implemented by changing the shim plate 50 that determines the inner space of the manifold 38 and the width of the slot 36.

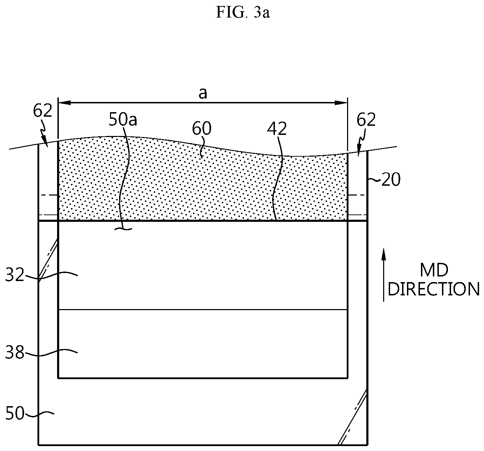

The shim plate 50 is a sheet-like member having a thickness that defines a slot gap. In this regard, FIGS. 3a to 3c schematically show an example of adjusting the coating width by varying the size and shape of the shim plate 50 inserted between the die blocks 32, 34.

First, referring to FIG. 3a, the shim plate 50 has an opening 50a by cutting one area, and is interposed in the remaining parts except for one side of the edge areas on the opposing surface of each of the die blocks 32, 34. The width of the opening 50a of the shim plate 50 is designed to be a so that an electrode active material layer 60 with a coating width a is formed on the current collector 20 and uncoated portions 62 are formed on both sides of the electrode active material layer 60.

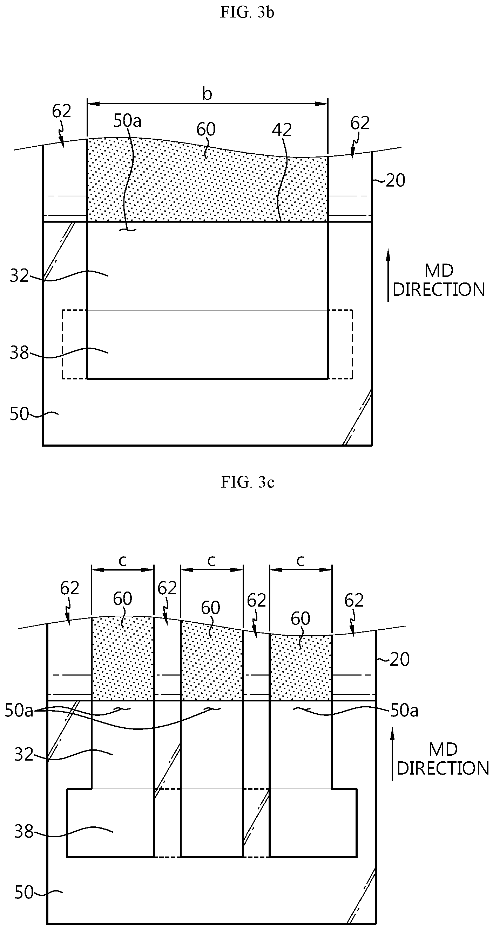

Referring to FIG. 3b, in order to form the electrode active material layer 60 with a coating width b smaller than a on the current collector 20, the width of the opening 50a of the shim plate 50 is designed to be b (b < a).

If necessary, an electrode active material layer 60 in a stripe pattern shape may be formed on the current collector 20. In such a case, a shim plate 50 as shown in FIG. 3c is used. Referring to FIG. 3c, the shim plate 50 has a plurality of openings 50a by intermittently cutting one area, and the width of the opening 50a is c, which is smaller than a or b (c < a, c < b). When such a shim plate 50 is used, an electrode active material layer 60 with a coating width c in a stripe pattern shape as many as the number of openings 50a is formed on the current collector 20, and uncoated portions 62 are formed on both sides of the electrode active material layer 60.

However, since the injection direction of the coating liquid in the slot die coater 30 using this shim plate 50 is the center portion of the die blocks 32, 34 (the slurry inlet is positioned in the center portion of the manifold 38, and the electrode active material slurry in the manifold 38 is filled and discharged), the amount of coating liquid applied to the center portion is larger than that to the side portion, resulting in an uneven coating profile in the width direction (perpendicular to the MD direction).

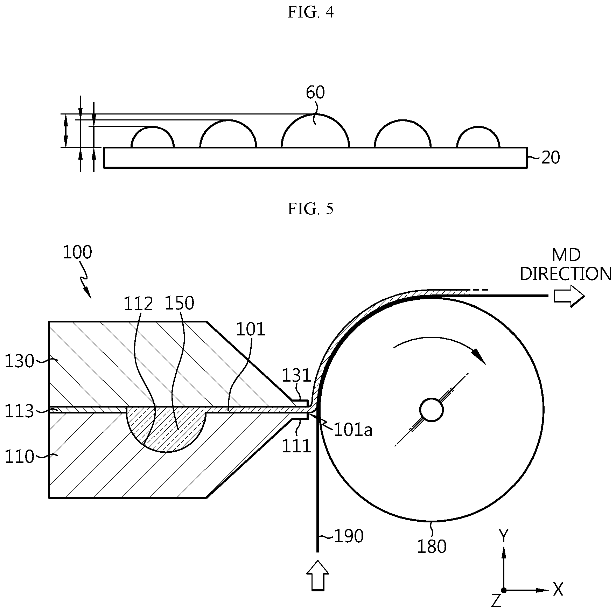

FIG. 4 is a view showing problems when using a conventional shim plate. What is shown in FIG. 4 is a cross-section of five electrode active material layers 60 formed on the current collector 20 when there are, for example, five openings 50a in the shim plate 50 as shown in FIG. 3c. As shown, five patterns are formed, but due to the high loading amount in the center of the width direction, the one positioned in the center of the electrode active material layer 60 is more heavily loaded than the others and has a different thickness, which results in showing an uneven coating profile in the width direction. In this way, in the prior art, a loading deviation for each position (center-side) in the coating width direction is inevitably found, so there is a problem that high electrode processing capability is not secured.

### DISCLOSURE

### Technical Problem

The present disclosure is designed to solve the problems of the related art, and therefore the present disclosure is directed to providing a shim plate capable of improving a loading deviation in the electrode coating width direction.

The present disclosure is also directed to providing a slot die coater including such a shim plate.

However, technical problems to be solved by the present disclosure are not limited to the above-described problems, and other problems not mentioned herein may be clearly understood by those skilled in the art from the following description of the present disclosure.

### Technical Solution

A shim plate of the present disclosure for solving the above-described problem is provided between a lower die block and an upper die block of a slot die coater to form a slot and to discharge a coating liquid through an outlet communicating with the slot, and the shim plate includes a plurality of protruding parts so as to have a plurality of openings by intermittently cutting one area, and a blocking part partially blocking a space between the protruding parts.

The blocking part may be positioned in a part where the loading amount of the coating liquid is intended to be reduced.

The shim plate may include a first part serving as a base and at least four second parts extending from the first part, wherein the second parts may be connected to the same side of the first part and extend in the same direction, and the second parts may be composed of two side second parts positioned on both sides and inner second parts positioned between the side second parts, wherein the blocking part may be positioned between the inner second parts.

The side second part may have a wider width than the inner second part.

Among the edges of the side second part, the edge part of the side where the coating liquid is discharged may be chamfered.

The chamfered part may be either a stepped surface having a constant cutting depth, or any one of an inclined surface, a convex curved surface or a concave curved surface in which the cutting depth gradually changes toward the end of the shim plate. The inclined surface may be formed at an angle of 10 to 80 degrees with respect to the direction of discharging the coating liquid.

The blocking part may be positioned between every two neighboring inner second parts.

The blocking part may not be positioned between the side second part and the inner second part, but may be positioned only between the inner second parts.

The blocking part may extend without being spaced apart from the first part.

The blocking part may extend being spaced apart from the first part to define an open vent portion between the first part and the blocking part.

The end of the blocking part defining the vent portion may have a rounded cross-sectional profile.

The length of the blocking part is greater than the size of the vent portion.

A slot die coater of the present disclosure for solving the other above-described problem, including a lower die block and an upper die block; a shim plate provided between the lower die block and the upper die block to form a slot; and a manifold provided in at least one of the upper die block and the lower die block and receiving a coating liquid, discharges and applies the coating liquid on a substrate through an outlet communicating with the slot, wherein the shim plate includes a plurality of protruding parts so as to have a plurality of openings by intermittently cutting one area to determine the coating width of the coating layer applied on the substrate, and a blocking part partially blocking a space between the protruding parts.

The manifold may include an upper manifold included in the upper die block and a lower manifold included in the lower die block. The upper manifold and the lower manifold may face each other, and the shim plate may be interposed between the upper manifold and the lower manifold.

A coating liquid inlet pipe for introducing the coating liquid may be connected to a coating liquid inlet hole formed in the center portion of the lower manifold.

The shim plate may include a first part serving as a base and at least four second parts extending from the first part, wherein the second parts may be connected to the same side of the first part and extend in the same direction, and the second parts may be composed of two side second parts positioned on both sides and inner second parts positioned between the side second parts, wherein the blocking part may be positioned between the inner second parts.

And, the blocking part may extend being spaced apart from the first part to define an open vent portion between the first part and the blocking part.

In such a case, the coating liquid may flow from the lower manifold to the upper manifold through the vent portion.

The blocking part may be formed in a shape capable of covering at least a portion of the coating liquid inlet hole.

The orthogonal projection of the blocking part does not deviate from the orthogonal projection of the manifold.

The front end of the blocking part may be positioned further behind than the front end of the manifold.

At the rear and front of the manifold, the lower surface of the upper die block and the upper surface of the shim plate may be coupled to each other without a gap, and the upper surface of the lower die block and the lower surface of the shim plate may be coupled to each other without a gap.

### Advantageous Effects

According to one aspect of the present disclosure, as a result of including the shim plate, a stripe pattern-shaped coating layer may be formed on a substrate without a loading deviation in the electrode coating width direction by using the slot die coater.

According to another aspect of the present disclosure, the loading deviation for each coating electrode position may be improved, and the coating liquid in the center portion may be guided to the side portion without a coating liquid vortex phenomenon.

### DESCRIPTION OF DRAWINGS

The accompanying drawings illustrate a preferred embodiment of the present disclosure and together with the foregoing disclosure, serve to provide further understanding of the technical features of the present disclosure, and thus the present disclosure is not construed as being limited to the drawing.
FIG. 1 is a schematic diagram showing an example of use of a slot die coater according to the prior art.
FIG. 2 is a cross-sectional view taken along line II-II' of FIG. 1.
FIGS. 3a to 3c show examples of using various conventional shim plates.
FIG. 4 is a view showing problems when using a conventional shim plate.
FIG. 5 is a cross-sectional view of a slot die coater according to an embodiment of the present disclosure.
FIG. 6 is a plan view of a shim plate included in a slot die coater according to an embodiment of the present disclosure.
FIG. 7 is a modified example of the shim plate shown in FIG. 6.
FIG. 8 is another modified example of the shim plate shown in FIG. 6.
FIG. 9 is still another modified example of the shim plate shown in FIG. 6.
FIG. 10 is a view showing the effect of using a shim plate according to an embodiment of the present disclosure.
FIG. 11 shows the flow of coating liquid through the shim plate of the comparative example.
FIG. 12 shows the flow of coating liquid through a shim plate according to an embodiment of the present disclosure.
FIG. 13 shows the flow of coating liquid in a slot die coater according to another embodiment of the present disclosure.

### BEST MODE

Hereinafter, preferred embodiments of the present disclosure will be described in detail with reference to the accompanying drawings. Prior to the description, it should be understood that the terms used in the specification and the appended claims should not be construed as limited to general and dictionary meanings, but interpreted based on the meanings and concepts corresponding to technical aspects of the present disclosure on the basis of the principle that the inventor is allowed to define terms appropriately for the best explanation. Therefore, the description proposed herein is just a preferable example for the purpose of illustrations only, not intended to limit the scope of the disclosure, so it should be understood that other equivalents and modifications could be made thereto without departing from the scope of the disclosure.

The same reference numerals refer to the same components. Also, in the drawings, the thickness, ratio, and dimensions of the components may be exaggerated for effective description of the technical content.

A slot die coater of the present disclosure is a device that has a slot and applies a coating liquid on a substrate through the slot. The 'substrate' described below is a current collector, and the 'coating liquid' is an electrode active material slurry. However, the scope of the present disclosure is not necessarily limited thereto. For example, the substrate may be a porous support constituting a separator, and the coating liquid may be an organic material. That is, the substrate and the coating liquid may be any as long as thin film coating is required. **In** this specification, 'front' refers to the direction toward the outlet and 'rear' refers to the opposite direction.

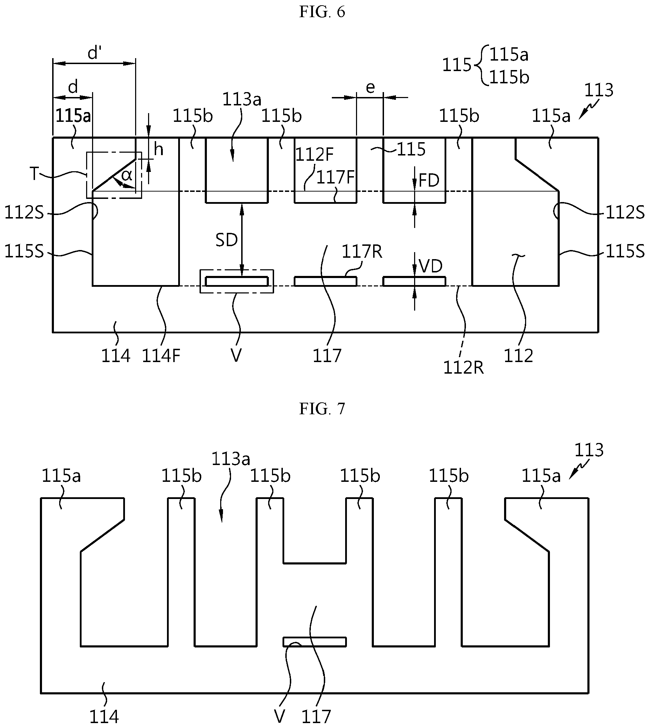

FIG. 5 is a cross-sectional view of a slot die coater according to an embodiment of the present disclosure. FIG. 6 is a plan view of a shim plate included in a slot die coater according to an embodiment of the present disclosure.

Referring to FIGS. 5 and 6, the slot die coater 100 includes two die blocks 110, 130. They are a lower die block and an upper die block, respectively. A shim plate 113 for forming a slot 101 is provided between the die blocks 110, 130. There may be two or more die blocks. **In** the following embodiment, a single slot die coater in which the slot 101 is defined between two die blocks 110, 130 will be mainly described, but the present disclosure may also be implemented with a dual slot die coater in which slots are formed dually including an upper plate, a middle plate, and a lower plate as a die block.

Most surfaces of the upper die block 130 and the lower die block 110, which are manufactured to be almost vertical, may be used. Since the edges formed by the faces are formed at a right angle in the upper die block 130 and the lower die block 110, there is a right angle in the cross-section, and a vertical or horizontal plane can be used as a reference plane, thereby making it easy to manufacture or handle and guaranteeing precision. In addition, when the upper die block 130 and the lower die block 110 are combined, the parts facing each other may be supported by each other with a high degree of surface contact, and thus fastening fixing and maintenance are very excellent. In addition, the combined state of the upper die block 130 and the lower die block 110 has an overall shape of a roughly rectangular parallelepiped, and only the front portion where the coating liquid is discharged has a shape inclined toward the substrate. The upper die block 130 and lower die block 110 are made of, for example, SUS. Materials that are easy to process, such as SUS420J2, SUS630, SUS440C, SUS304, and SUS316L, may be used. SUS has the advantages of being easy to process, inexpensive, highly corrosion resistant, and enabling to be manufactured into desired shapes at low cost.

In FIG. 5, the slot die coater 100 is installed with the direction (X direction) in which the electrode active material slurry, which is the coating liquid 150, is discharged almost horizontal (approximately ±5 degrees). However, it is not necessary to be limited to the form shown here as an example, and for example, it may be configured as a vertical die with the direction in which the electrode active material slurry is discharged upward (Y direction). The Z direction is the width direction of the slot die coater 100.

A slot 101 is formed between places where the die blocks 110, 130 face each other. The shim plate 113 is interposed therein to provide a gap between them, thereby forming a slot 101 corresponding to a passage through which the coating liquid 150 may flow. The thickness of the shim plate 113 determines the vertical width (Y direction, slot gap) of the slot 101.

As shown in FIG. 6, the shim plate 113 has a plurality of openings 113a by intermittently cutting one area, and may be interposed in the remaining parts except for one side of the edge areas on the opposing surface of each of the die blocks 110, 130. Accordingly, the outlet 101a through which the coating liquid 150 may be discharged to the outside is formed between the die lips 111, 131, which are the respective front ends of the die blocks 110, 130. The outlet 101a can be said to be formed by spacing the die lips 111, 131 apart, and the end of the slot 101 becomes the outlet 101a.

For reference, the shim plate 113 also functions as a gasket that prevents the coating liquid 150 from leaking through the gap between the die blocks 110, 130, except for the area where the outlet 101a is formed, thereby preferably being made of a material having sealing properties. The shim plate 113 may be made of, for example, plastic or metal, but the present disclosure is not limited thereto. The shim plate 113 may be, for example, a resin sheet such as Teflon or polyester, or a metal sheet such as copper or aluminum. The shim plate 113 may be coupled and fixed to at least one of the two die blocks 110, 130 through, for example, screws, but the present disclosure is not limited thereto.

At least one of the die blocks 110, 130 is provided with a manifold 112 that has a predetermined depth and communicates with the slot 101. This embodiment illustrates an example in which the lower die block 110 is provided with a manifold 112 that receives the coating liquid. This manifold 112 is connected to an externally installed coating liquid supply chamber (not shown) through a supply pipe to receive the coating liquid 150. When the manifold 112 is filled with the coating liquid 150, the coating liquid 150 is guided to flow along the slot 101 and is discharged to the outside through the outlet 101a communicated with the slot 101.

According to the slot die coater 100 having this configuration, a coating roll 180 provided to be rotatable may be disposed in front of the slot die coater 100, and while driving the substrate 190 to be coated by rotating the coating roll 180, the coating liquid 150 may be discharged and coated continuously in contact with the surface of the substrate 190 to be applied to the substrate 190. Alternatively, a pattern coating may also be formed intermittently on the substrate 190 by alternately supplying and stopping the coating liquid 150.

At the rear and front of the manifold 112, the lower surface of the upper die block 130 and the upper surface of the shim plate 113 may be coupled to each other without a gap, and the upper surface of the lower die block 110 and the lower surface of the shim plate 113 may be coupled to each other without a gap. This allows the coating liquid 150 to flow only within the slot 101 defined by the shim plate 113. As a result of including this shim plate 113, a stripe pattern-shaped coating layer 170 may be formed on the substrate 190 by using the slot die coater 100.

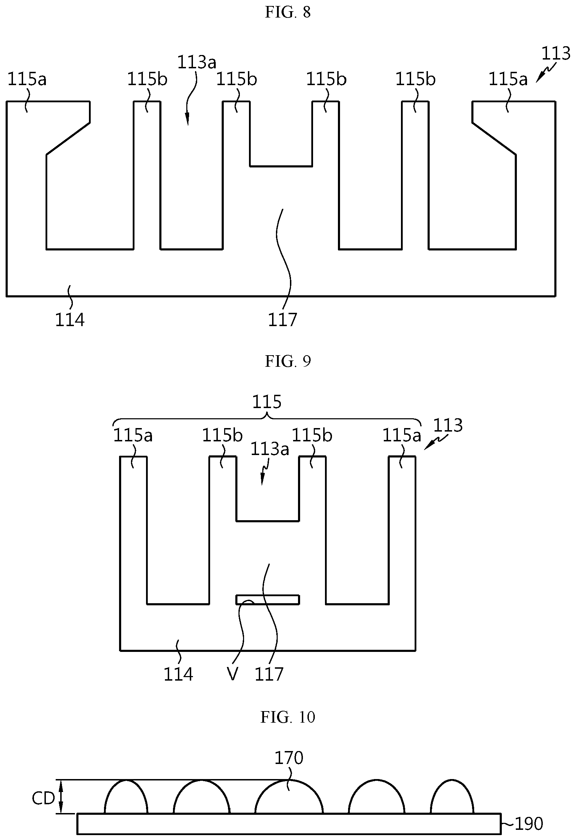

In particular, the shim plate 113 shown in FIG. 6 has a plurality of openings 113a by intermittently cutting one area, which may form a stripe pattern-shaped coating layer (170 in FIG. 10) on the substrate 190.

The shim plate 113 includes a plurality of protruding parts 115 so as to have a plurality of openings 113a by intermittently cutting one area to determine the coating width of the coating layer applied on the substrate 190, and a blocking part 117 that partially blocks the space between the protruding parts 115.

As such, the present disclosure proposes a coating that induces an improvement in loading deviation for each coating electrode position through the development of a novel shim plate 113 in the coating process. The shim plate 113 may be referred to as a flow-induced block shim (FIB Shim).

The blocking part 117 may be positioned in a part where the loading amount of the coating liquid 150 is intended to be reduced. For example, if the injection direction of the coating liquid 150 from the outside in the slot die coater 100 is the center portion of the die blocks 110, 130, the amount of coating liquid (loading amount) applied to the center portion may be larger than that to the side portion. In such a case, the blocking part 117 is included in the center portion of the shim plate 113 to reduce the loading amount of the center portion.

The loading amount may be determined depending on the position and area (size) of the blocking part 117, and the position and area may be adjusted depending on the degree to which the flow rate of the coating liquid 150 is intended to be controlled in the width direction. Accordingly, the width direction flow rate of the coating liquid inside the die blocks 110, 130 may be adjusted, and the width direction coating uniformity may be improved.

By using the slot die coater 100 including this shim plate 113 of the present disclosure, a coating layer, especially an electrode active material layer, may be uniformly formed with a desired thickness and shape. The coating liquid 150 is discharged between neighboring protruding parts 115, and according to the present disclosure, the coating liquid 150 is not discharged directly from the manifold 112 through the protruding parts 115, but rather strikes the blocking part 117 between the protruding parts 115 and is discharged once the flow is rectified. When the blocking part 117 is particularly included in the center portion of the shim plate 113, the coating liquid 150 may be induced to flow along the slot 101 between the protruding parts 115 with less deviation in the width direction than in the prior art, and may be discharged to the outside through the outlet 101a, thereby significantly improving the deviation in the width direction.

The shim plate 113 may be a seamless, one-piece structure. That is, even if the blocking part 117 is included between the protruding parts 115, the part where the blocking part 117 and the protruding parts 115 are connected may have seamless continuity. The shim plate 113 may have a flat upper surface and a flat lower surface. That is, it may be a sheet-like member.

The shim plate 113 may be integrally formed from the beginning when the shim plate 113 is manufactured, rather than formed by further adding or bonding the blocking part 117 as a separate member. By doing so, the manufacturing process is not cumbersome, there is an advantage in that it is not necessary to consider and manage the bonding force between the two, which should be considered in the case of the blocking part 117 being a separate structure, and it is also structurally robust. In addition, the problem that the coating liquid 150 is unnecessarily caught between the connecting parts can be avoided.

The upper surface of the shim plate 113 is flat and the lower surface of the shim plate 113 is also flat, so that the shim plate 113 may be formed into a roughly plate shape.

Looking in more detail with reference to FIG. 6, specifically, the shim plate 113 includes a first part 114 serving as a base and at least four second parts 115 extending from the first part 114, wherein the second parts 115 are connected to the same side of the first part 114 and extend in the same direction. Here, the second parts 115 are the protruding parts 115.

The first part 114 extends along the width direction. In addition, the first part 114 constitutes the rear side of the shim plate 113. The second parts 115 extend from the first part 114 toward the front side, respectively. The end of the second part 115 becomes the front end of the shim plate 113. The second parts 115 are disposed to be spaced apart from each other in the width direction. The space between the two adjacent second parts 115 is defined as an opening 113a.

The second part 115 is composed of side second parts 115a positioned on both sides and inner second parts 115b positioned between the side second parts 115a. In this embodiment, the number of inner second parts 115b is four. The number of inner second parts 115b may vary (at least two). If the number of second parts 115 is N, the number of side second parts 115a is two, and the number of inner second parts 115b is N - 2 (N is at least four). This shim plate 113 includes N - 1 openings 113a, wherein each opening 113a becomes a lane forming a pattern and may form N - 1 stripe-type coating layers.

The blocking part 117 may be positioned between the inner second parts 115b. In this embodiment, the blocking part 117 is positioned between every two neighboring inner second parts 115b. In this case, the flow of the coating liquid 150 from the center portion may be guided to the side portion through a shim shape that forcibly blocks the space within the manifold 112.

The blocking part 117 is not positioned between the side second part 115a and the inner second part 115b, but positioned only between the inner second parts 115b. That is, the blocking part 117 is positioned in the center portion and not in the side portion. As the coating liquid 150 hits the blocking part 117 positioned in the center portion and is rectified, a portion of the coating liquid 150 flowing into the center portion is sent to both side portions. Therefore, it is possible to prevent the coating liquid 150 from concentrating in the center portion, and accordingly, by using the slot die coater 100 of the present disclosure, a coating layer, particularly, an electrode active material layer having a stripe pattern shape, may be uniformly formed along the width direction with a desired thickness and shape.

The first part 114 and the second part 115 may be integrally formed. That is, there is no gap or separation between the first part 114 and the second part 115. Therefore, unnecessary flow of the coating liquid 150 between the first part 114 and the second part 115 may be prevented. In addition, since the shim plate 113 may be integrally formed from the beginning in manufacturing it as mentioned above, the blocking part 117 may also be integrally formed with the first part 114 and the second part 115. And, the first part 114, the second part 115, and the blocking part 117 may have the same thickness as each other. Therefore, the shim plate 113 may be installed between the die blocks 110, 130 with almost no gap up and down, and unnecessary flow of the coating liquid 150 may be prevented.

In this embodiment, the second parts 115 are included in six. The first part 114 is a part of the shim plate 113 placed at the rear of the lower die block 110. In order to allow the shim plate 113 to be interposed in the remaining parts except for one side of the edge areas on the opposing surface of each of the upper die block 130 and the lower die block 110, the second part 115 should be at least two, and the number should be greater than that for a stripe pattern coating. The second part 115 extends in a direction toward the outlet 101a. The second part 115 is connected to the same side of the first part 114 and extends in the same direction, and the space between the two adjacent second parts 115 is defined as the opening 113a. The second part 115 is a part extending from the shim plate 113 toward the front of the lower die block 110. As the number of second parts 115 increases, more patterns may be formed side by side on the substrate 190. That is, a stripe pattern coating may be performed. However, the present disclosure is not limited by the number of second

### parts 115.

The side second part 115a may have a wider width than the inner second part 115b. For example, when the width of the side second part 115a is d and the width of the inner second part 115b is e, it may be d > e. When the side second part 115a has a wider width than the inner second part 115b, the configuration of the entire shim plate 113 may be made robust.

Furthermore, the length d' of the side second part 115a at the end of the shim plate 113 may be greater than the width d of the side second part 115a. **In** other words, the part of the side second part 115a adjacent to the outlet 101a may extend further toward the inner second part 115b. By adjusting the degree of extension, the width of the opening 113a may be controlled to control the coating width.

Among the edges of the side second part 115a, the edge part of the side where the coating liquid 150 is discharged may be chamfered. The chamfered part T may be either a stepped surface having a constant cutting depth, or any one of an inclined surface, a convex curved surface or a concave curved surface in which the cutting depth changes toward the end of the shim plate 113. What is shown in the drawing is an inclined surface. The inclined surface may be formed at an angle α of 10 to 80 degrees with respect to the direction of discharging the coating liquid 150. If the angle is outside the above range, the flow of the coating liquid 150 may become unnatural, or the shape of the edge boundary may not be made stable.

In the illustrated example, the cutting depth is gradually reduced toward the end of the shim plate 113, or in other words, the cutting depth is gradually increased toward the inside heading for the manifold 112. The length of the side second part 115a at the end of the shim plate 113 is d', which is maintained up to the inner depth h, and then the cutting depth is gradually increased to form an inclined surface until the width d is reached. In this way, if the surface corresponding to the inside of the outlet 101a in the side second part 115a, that is, such a chamfered part on the inner edge of the side second part 115a is included, it is possible to control the sliding of both edges of the pattern. The depth h at which cutting begins may be appropriately determined by considering the flow of the coating liquid 150. In addition, the chamfered part T may also be provided in the inner second part 115b.

Conversely, the cutting depth may also be gradually increased toward the end of the shim plate 113. Then, the outlet 101a positioned on the side gradually expands as the width thereof gets closer to the outside from one point. In other words, it can be said that the outlet 101a is provided to gradually expand in the rotation direction (or MD direction) of the coating roll 180. By dispersing the pressure of the coating liquid 150 discharged through this, the coating liquid 150 may be prevented from scattering to other areas, a boundary surface may be stably formed between the coating portion and the uncoated portion, and the coating quality of the product may be improved. In this way, by forming the chamfered part, the coating liquid 150 may leave the die lips 111, 131 and reach the substrate 190 after the coating liquid 150 is sufficiently expanded from the end of the second part 115, that is, after the discharge pressure is partially relieved, so that the coating liquid 150 is not scattered. In addition, a boundary surface may be stably formed between the active material layer pattern and the uncoated portion. The shim plate 113 may include a vent portion V. As the blocking part 117 extends being spaced apart from the first part 114, an open vent portion V may be defined between the first part 114 and the blocking part 117. In the design of type two die (wherein manifolds are in both the upper die block and the lower die block, which will be described later in the following embodiment), the vent portion V may also be formed by partially opening the lower space to prevent a vortex phenomenon of the coating liquid 150.

Specifically, in the shim plate 113 of FIG. 6, the gap FD between the front end 112F of the manifold 112 and the front end 117F of the blocking part 117 may be about 3 mm. For example, the gap FD may be 2-4 mm. In this way, the front end 117F of the blocking part 117 is positioned further behind than the front end 112F of the manifold 112. A predetermined offset is placed between the front end 112F of the manifold 112 and the front end 117F of the blocking part 117, so that the coating liquid 150 in the manifold 112 may be stably discharged through the space between the second parts 115. As such, the blocking part 117 is not formed on the land portion beyond the manifold 112. The blocking part 117 does not impede the flow of the coating liquid 150 passing over the land portion. The blocking part 117 covers the manifold 112. In other words, the orthogonal projection of the blocking part 117 does not deviate from the orthogonal projection of the manifold 112. The blocking part 117 is positioned only in the inner area of the manifold 112.

The rear end 112R of the manifold 112 and the front end 114F of the first part 114 may be aligned to be placed on the same line in the upper-lower direction. The inner edge 115S of the side second part 115a may be aligned to be placed on the same line on both left and right ends 112S of the manifold 112 in the upper-lower direction. In this way, the first part 114 and the side second part 115a are placed along the perimeter of the manifold 112, and a part of the center portion may be covered by the blocking part 117 while most area of the manifold 112 is exposed by the shim plate 113.

The size VD of the open vent portion V may be about 5 mm. The size VD may be referred to as a length exposed from the rear to the front. For example, the size VD may be 3-8 mm. The three-dimensional shape of the vent portion V may be a semicircular cylinder. For example, when the size VD of the vent portion V is 5 mm, the open vent portion V may be formed in the form of a semicircular cylinder with a radius of 2.5 mm to prevent a vortex phenomenon. In other words, the end of the blocking part 117 defining the vent portion V may be R-processed (rounded) to have a rounded cross-sectional profile. By rounding the part of the vent portion V that comes into contact with the coating liquid when the coating liquid 150 subjected to an upward force from the bottom surface of the manifold 112 flows out through the vent portion V, it is possible to suppress the generation of vortex and smooth the flow of the coating liquid 150.

The vent portion V is positioned at the rear side even in the shim plate 113 in this way. And, the area occupied by the vent portion V in the shim plate 113 is smaller than the area occupied by the blocking part 117. For example, when the length from the front end 117F to the rear end 117R of the blocking part 117 is called SD, the length SD of the blocking part 117 is larger than the size VD of the vent portion V. Therefore, most of the area in the center portion of the manifold 112 is covered by the blocking part 117, and only a narrower part thereof is exposed to the vent portion V. By positioning the vent portion V to the rear side of the shim plate 113, the coating liquid 150 flowing through the vent portion V may be guided toward the outlet 101a through a wide range of the upper surface of the blocking part 117.

In a state where the length of the left and right ends 112S of the manifold 112 is fixed at a predetermined value, the shim plate 113 may be designed while satisfying a predetermined dimensional relationship among the distance FD between the front end 112F of the manifold 112 and the front end 117F of the blocking part 117, the length SD of the blocking part 117, and the size VD of the vent portion V. For example, distance FD : length SD : size VD may be 2-4 : 47-51 : 4-6. Preferably distance FD : length SD : size VD may be 3 : 49 : 5. The distance FD may be smaller than the size VD. The length SD may be more than 7.8 times the size VD. Preferably, the length SD is 9.8 times the size VD. Therefore, most of the area in the center portion of the manifold 112 is covered by the blocking part 117, and only a narrower part thereof is exposed to the vent portion V. If the size VD of the vent portion V is too small, the pressure applied to the coating liquid 150 when the coating liquid 150 subjected to an upward force from the bottom surface of the manifold 112 flows out through the vent portion V, becomes too great, which is not preferable. Instead, if the size VD of the vent portion V is too large, the length SD of the blocking part 117 becomes small, and thus the degree of inducing the coating liquid 150 to the side portion may be reduced, whereby the size VD of the vent portion V should be determined in an organic relationship with the length SD of the blocking part 117 in consideration of these points.

It has been described that the edge part of the side where the coating liquid 150 is discharged may be chamfered. For example, it may be a shape that is obliquely cut into the edge from the part having a depth h of 20 mm inward from the end of the shim plate 113. For example, it may be a shape that is obliquely cut to the front end 112F of the manifold 112. This may further induce the flow rate of the side portion to control the sliding shape or the like.

FIG. 7 is a modified example of the shim plate shown in FIG. 6.

In the shim plate 113 of FIG. 6, the blocking part 117 is positioned between every two neighboring inner second parts 115b. In the shim plate 113 of FIG. 7, the blocking part 117 is positioned only between the two inner second parts 115b in the center portion among the four inner second parts 115b. In this way, the blocking part 117 is positioned between the inner second parts 115b, but may be selectively positioned only in a part where the loading amount of the coating liquid 150 is intended to be reduced.

FIG. 8 is another modified example of the shim plate shown in FIG. 6.

The shim plate 113 shown in FIG. 8 does not include a vent portion V compared to the shim plates 113 shown in FIGS. 6 and 7. As such, the blocking part 117 may also extend without being spaced apart from the first part 114.

FIG. 9 is still another modified example of the shim plate shown in FIG. 6.

In the illustrated example, the second part 115 is composed of two side second parts 115a and two inner second parts 115b. This shim plate 113 defines three openings 113a. The blocking part 117 is positioned between the inner second parts 115b. In this way, the number of inner second parts 115b may vary depending on the number of coating layers to be formed. The width of the side second part 115a and the width of the inner second part 115b may also be different from those in the shim plate 113 shown in FIG. 6. In order to form a coating layer having a desired width, the width of the opening 113a is fixed, and the width of the side second part 115a and the width of the inner second part 115b may be changed as much as possible. FIG. 10 is a view showing the effect of using a shim plate according to an embodiment of the present disclosure.

What is shown in FIG. 10 is a cross-section of five coating layers 170 formed on the substrate 190 when there are five openings 113a, as in the shim plate 113 shown in FIG. 6. Five patterns are formed, and a uniform coating profile is shown in the width direction. In this way, according to the present disclosure, a loading deviation for each reference position (center-side) in the coating width direction does not occur, and as a result, high electrode processing capability may be secured. The coating layer thickness CD along the width direction of the substrate 190 may be uniform regardless of the location. Accordingly, according to the present disclosure, a coating layer, particularly an electrode active material layer, may be formed stably without causing pattern defects.

Meanwhile, the embodiment of the present disclosure will be described in more detail by describing an experimental example as follows.

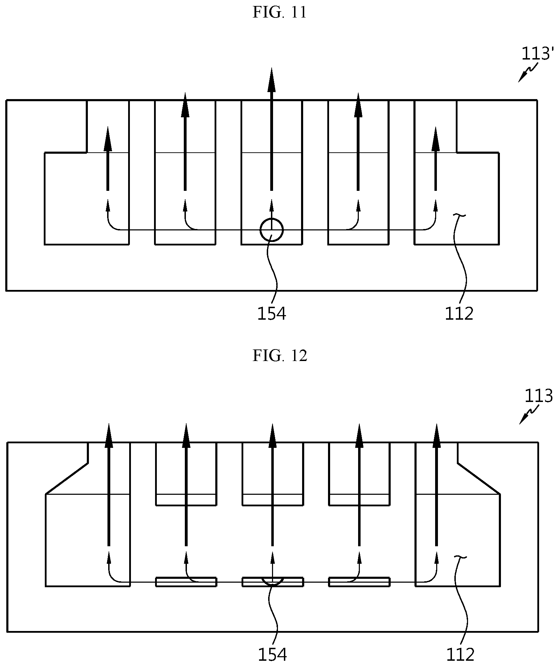

For the shim plate of an embodiment of the present disclosure applied with FD 3 mm, VD 5 mm, and h 20 mm, the loading deviation in the width direction was tested compared to the shim plate of a comparative example that does not relate thereto. The comparative example corresponds to that the shim plate 113 according to an embodiment of the present disclosure does not have the blocking part 117 and the edge part on the side where the coating liquid 150 is discharged is not chamfered (see 113' in FIG. 11).

Based on loading, the comparative example was measured as 5.56 mg/25cm² in the cell, and the embodiment of the present disclosure was measured as 5.37 mg/25cm², confirming the effect of reducing the loading deviation in the width direction by 3.5%. In particular, the comparative example was measured as 9.12 mg/25cm² in the center portion of the width direction, and the embodiment of the present disclosure was measured as 3.22 mg/25cm², confirming the effect of reducing the loading deviation in the width direction by 183.2% in the embodiment of the present disclosure.

According to the present disclosure, improvement in process capability was also confirmed.

Currently, an electrode active material layer in the shape of a stripe pattern is formed on a current collector, and then the uncoated portion between the electrode active material layers is slit to be used as each electrode plate. At this time, a position close to the shim of the shim plate forming the uncoated portion is formed as a tab during the notching process in the assembly process after the electrode process. Since the coated electrode position close to this tab is the coating area included in the actual cell, sampling was performed for loading measurement in the corresponding part, and the corresponding position is indicated as 'cell' hereinbelow. Sampling was also performed for loading measurement in the central area for each coating lane based on the coating electrode, and the corresponding position is indicated as 'center' hereinbelow.

The index used to check process capability is Cpk, which is a process capability index, and in a statistical sense, it is known to be used as a number to check how close to the target and how consistent the performance is within the specifications of a given product. For example, the more the values of measured data are close to the target, the higher the Cpk, and the greater the distribution of data within the specification, the lower the Cpk.

When the Cpk of the loading measurement data at the sampling position labelled 'cell' is referred to as cell_Cpk and the Cpk of the loading measurement data at the sampling position labelled 'center' is referred to as center_Cpk, the comparative example has a cell_Cpk of 2.09, a center_Cpk of 0.71, and a cell_Cpk + center_Cpk of 1.05, whereas the embodiment of the present disclosure has a cell_Cpk of 2.81, a center_ Cpk of 3.04, and a cell_Cpk + center_Cpk of 1.94.

As described above, the cell_Cpk, center_Cpk, cell_Cpk + center_Cpk in the present disclosure are all higher than those in the comparative example. Therefore, according to the present disclosure, it can be seen that the loading at the position indicated by 'cell' and the position indicated by 'center' are both close to the target and the scattering is small within the specification. Accordingly, it can be confirmed that the process capability of the present disclosure has been improved compared to the comparative example.

FIG. 11 shows the flow of coating liquid through the shim plate of the comparative example.

As shown in FIG. 11, the shim plate 113' of the prior art compared to the present disclosure can be said to have all the spaces between the protruding parts open. In this shim plate 113', the coating liquid is filled without any blocked spaces in the manifold 112 and the coating liquid is discharged in the direction of the arrow. The length of the arrow can be seen as the discharge amount of coating liquid, but as mentioned previously, there is a problem of loading concentration in the center portion.

FIG. 12 shows the flow of coating liquid through a shim plate according to an embodiment of the present disclosure.

Compared to FIG. 11, in the shim plate 113 of the present disclosure, the space between the protruding parts is blocked to guide the flow of the coating liquid from the center portion to the side portion. As a result, the amount of coating liquid discharged from the center portion or the side portion becomes similar. It should be noted that the arrow lengths in the drawing are the same. Through this, an electrode coating profile as shown in FIG. 10 may be obtained.

The manifold shape is difficult to change after initial molding. According to the present disclosure, there is an advantage in that the loading of the slot die coater 100 may be controlled through the shape of the shim plate 113 without having to change the manifold.

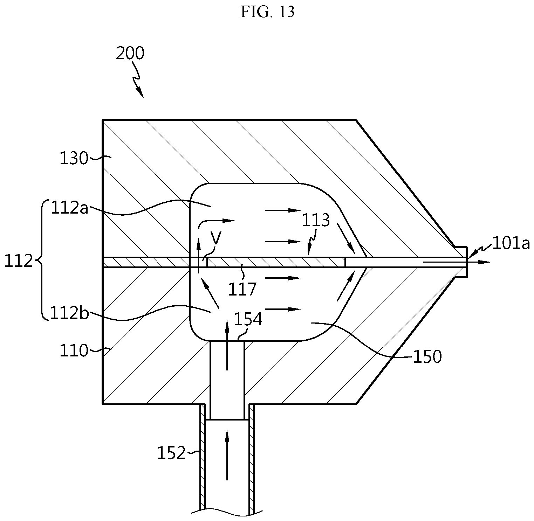

FIG. 13 shows the flow of coating liquid in a slot die coater according to another embodiment of the present disclosure.

In the slot die coater 200 of FIG. 13, the manifold 112 may include an upper manifold 112a included in the upper die block 130 and a lower manifold 112b included in the lower die block 110. In other words, the manifold 112 is provided on both the upper die block 130 and the lower die block 110. The shim plate 113 may be interposed between the upper manifold 112a and the lower manifold 112b.

A coating liquid inlet pipe 152 for introducing the coating liquid 150 may be connected to a coating liquid inlet hole 154 formed in the center portion of the lower manifold 112b.

As shown in FIGS. 6 and 12, the blocking part 117 may be formed in a shape capable of covering at least a part of the coating liquid inlet hole 154. In comparison, the shim plate 113' of the comparative example shown in FIG. 11 does not cover the coating liquid inlet hole 154.

The shim plate 113 includes a vent portion V, and the coating liquid 150 may flow from the lower manifold 112b to the upper manifold 112a through the open vent portion V. That is, due to the type two die design, the vortex phenomenon of the coating liquid 150 is prevented. The flow of the coating liquid 150 is as shown by the arrow. The coating liquid 150, which flows through the coating liquid inlet hole 154 formed in the center portion of the bottom surface of the lower manifold 112b and is subjected to an upward force, hits the blocking part 117 of the shim plate 113 and is rectified, and some of it flows into the upper manifold 112a through the vent portion V. The coating liquid 150 is stably discharged through the space between the front end of the lower manifold 112b and the front end of the blocking part 117, and is then discharged through the outlet 101a while being guided by the second part 115.

An electrode active material layer may be stably formed using the above-described slot die coater 100, 200 and modifications thereof. For example, coating the positive electrode active material slurry may be applied to manufacture the positive electrode of a secondary battery.

In particular, according to the present disclosure, by forming the positive electrode active material layer and the negative electrode active material layer to a uniform thickness, it is highly preferable to be able to face an accurate loading amount as a target when the positive electrode including the positive electrode active material layer and the negative electrode including the negative electrode active material layer face each other. Loss occurs in the case of an electrode where loading off occurs, but according to the present disclosure, loading off may be prevented, thereby causing an effect of reducing loss. In addition, the occurrence of lithium precipitation increases in the case of an electrode with high positive electrode loading and low negative electrode loading facing each other, but according to the present disclosure, it may be manufactured by balancing the positive electrode loading and the negative electrode loading, thereby expecting the effect of preventing lithium precipitation.

The positive electrode includes a current collector and a positive electrode active material layer formed on the surface of the current collector. The current collector is one that exhibits electrical conductivity, such as Al or Cu, and an appropriate current collector may be used according to the polarity of the electrode known in the secondary battery field. The positive electrode active material layer may further include one or more of a plurality of positive electrode active material particles, a conductive material, and a binder. In addition, the positive electrode may further include various additives for the purpose of complementing or improving electrochemical properties.

The active material is not limited to a specific component as long as it can be used as a positive electrode active material for a lithium-ion secondary battery. Non-limiting examples thereof may include any one selected from: layered compounds such as lithium manganese composite oxide (LiMn₂O₄, LiMnO₂), lithium cobalt oxide (LiCoO₂), lithium nickel oxide (LiNiO₂), or compounds substituted with one or more transition metals; lithium manganese oxide represented by the chemical formula Li₁₊ₓMn₂₋ₓO₄ (where x is 0 to 0.33), such as LiMnO₃, LiMn₂O₃, LiMnO₂; lithium copper oxide (Li₂CuO₂); vanadium oxide such as LiV₃O₈, LiV₃O₄, V₂O₅, Cu₂V₂O₇; Ni site type lithium nickel oxide represented by the chemical formula LiNi₁₋ₓMₓO₂ (where M is Co, Mn, Al, Cu, Fe, Mg, B or Ga, and x is 0.01 to 0.3); lithium manganese complex oxide represented by the chemical formula LiMn₂₋ₓMₓO₂ (where M is Co, Ni, Fe, Cr, Zn or Ta, and x is 0.01 to 0.1) or Li₂Mn₃MO₈ (where M is Fe, Co, Ni, Cu or Zn); LiMn₂O₄ in which a part of Li in the chemical formula is substituted with an alkaline earth metal ion; disulfide compounds; Fe₂(MoO₄)₃; or a mixture of two or more of them. In the present disclosure, the positive electrode may include one or more of a polymer-based solid electrolyte, an oxide-based solid electrolyte, and a sulfide-based solid electrolyte as a solid electrolyte material.

The conductive material may typically be added in an amount of 1wt% to 20wt% based on the total weight of the mixture including the active material. This conductive material is not particularly limited as long as it has conductivity without causing chemical changes in the corresponding battery, and particular examples thereof may include any one selected from conductive materials such as: graphite such as natural graphite or artificial graphite; carbon black such as acetylene black, ketjen black, channel black, furnace black, lamp black, and summer black; conductive fibers such as carbon fiber or metal fiber; carbon fluoride; metal powders such as, aluminum, and nickel powder; conductive whiskers such as zinc oxide and potassium titanate; conductive metal oxides such as titanium oxide; polyphenylene derivatives; or a mixture of two or more of them.

The binder is not particularly limited as long as it is a component that aids in the binding of the active material and the conductive material and the binding to the current collector, and particular examples thereof may include polyvinylidene fluoride, polyvinyl alcohol, carboxymethyl cellulose (CMC), starch, hydroxypropyl cellulose, regenerated cellulose, polyvinylpyrrolidone, tetrafluoroethylene, polyethylene, polypropylene, ethylenepropylene-diene monomer (EPDM), sulfonated EPDM, styrene butadiene rubber, fluorine rubber, and various copolymers. The binder may typically be included in the range of 1wt% to 30wt%, or 1wt% to 10wt%, based on 100wt% of the electrode layer.

Coating the negative electrode active material slurry using the slot die coater 100, 200 of the present disclosure may also be applied to manufacturing the negative electrode of a secondary battery. The negative electrode includes a current collector and a negative electrode active material layer formed on the surface of the current collector. The negative electrode active material layer may further include one or more of a plurality of negative electrode active material particles, a conductive material, and a binder. In addition, the negative electrode may further include various additives for the purpose of complementing or improving electrochemical properties.

The negative electrode active material may be a carbon material such as graphite, amorphous carbon, diamond-like carbon, fullerene, carbon nanotubes, and carbon nanohorns, lithium metal materials, alloy materials such as silicon or tin-based alloy material, oxide materials such as Nb₂O₅, Li₅Ti₄O₁₂, TiO₂, or a combination thereof. For the negative electrode, the conductive material, binder, and current collector may be referred to the contents described for the positive electrode.

The active material slurry including such a positive electrode active material or a negative electrode active material has a very high viscosity. For example, the viscosity may be 1000 cps or more. The viscosity of the active material slurry for use in forming the electrode for secondary battery may also be 2000 cps to 30000 cps. For example, the negative electrode active material slurry may have a viscosity of 2000 cps to 4000 cps. The positive electrode active material slurry may have a viscosity of 8000 cps to 30000 cps. Since it should be possible to coat a coating liquid with a viscosity of 1000 cps or more, the slot die coater 100, 200 of the present disclosure is different from the structure of a device that applies an ordinary resin liquid such as a coating liquid with a lower viscosity, for example, a photo-sensitive emulsion liquid, a magnetic liquid, a liquid imparting antireflection or anti-glare properties, a liquid imparting a viewing angle expansion effect, and a pigment liquid for a color filter, and it is not a device that can be achieved by changing the structure. Since the slot die coater 100, 200 of the present disclosure is for applying an active material slurry that may also include an active material having an average particle diameter of, for example, about 10 µm, there is also a difference in the structure of the device for applying other coating liquids that do not include particles of this size, and it is not a device that can be achieved by changing the structure. The slot die coater 100, 200 of the present disclosure is optimized as a coater for electrode manufacturing.

The present disclosure has been hereinabove described with regard to a limited number of embodiments and drawings, but the present disclosure is not limited thereto and it is obvious to those skilled in the art that a variety of modifications and changes may be made thereto within the technical aspects of the present disclosure and the equivalent scope of the appended claims.

Meanwhile, the terms indicating directions as used herein such as upper, lower, left, and right are used for convenience of description only, and it is obvious to those skilled in the art that the term may change depending on the position of the stated element or an observer.

**[Explanation of Reference Signs]**

| | | | |
|---|---|---|---|
| 100, 200: | slot die coater | 101: | slot |
| 101a: | outlet | 110: | lower die block |
| 111, 131: | die lip | 112: | manifold |
| 113: | shim plate | 115: | protruding part |
| 117: | blocking part | 130: | upper die block |
| 150: | coating liquid | 152: | coating liquid inlet pipe |
| 154: | coating liquid inlet hole | 170: | coating layer |
| 180: | coating roll | 190: | substrate |
| V: | vent portion | | |

## Claims

1. A shim plate provided between a lower die block and an upper die block of a slot die coater to form a slot and to discharge a coating liquid through an outlet communicating with the slot, comprising:
a plurality of protruding parts so as to have a plurality of openings by intermittently cutting one area, and a blocking part partially blocking a space between the protruding parts.

2. The shim plate according to claim 1, wherein the blocking part is positioned in a part where the loading amount of the coating liquid is intended to be reduced.

3. The shim plate according to claim 1, comprising a first part serving as a base and at least four second parts extending from the first part, wherein the second parts are connected to the same side of the first part and extend in the same direction, and the second parts are composed of two side second parts positioned on both sides and inner second parts positioned between the side second parts, wherein the blocking part is positioned between the inner second parts.

4. The shim plate according to claim 3, wherein the blocking part is positioned between every two neighboring inner second parts.

5. The shim plate according to claim 3, wherein the blocking part is not positioned between the side second part and the inner second part, but is positioned only between the inner second parts.

6. The shim plate according to claim 3, wherein the blocking part extends without being spaced apart from the first part.

7. The shim plate according to claim 3, wherein the blocking part extends being spaced apart from the first part to define an open vent portion between the first part and the blocking part.

8. The shim plate according to claim 7, wherein the end of the blocking part defining the vent portion has a rounded cross-sectional profile.

9. The shim plate according to claim 7, wherein the length of the blocking part is greater than the size of the vent portion.

10. A slot die coater, comprising a lower die block and an upper die block; a shim plate provided between the lower die block and the upper die block to form a slot; and a manifold provided in at least one of the upper die block and the lower die block and receiving a coating liquid, which discharges and applies the coating liquid on a substrate through an outlet communicating with the slot,
wherein the shim plate comprises a plurality of protruding parts so as to have a plurality of openings by intermittently cutting one area to determine the coating width of the coating layer applied on the substrate, and a blocking part partially blocking a space between the protruding parts.

11. The slot die coater according to claim 10, wherein the manifold comprises an upper manifold comprised in the upper die block and a lower manifold comprised in the lower die block, the upper manifold and the lower manifold face each other, and the shim plate is interposed between the upper manifold and the lower manifold.

12. The slot die coater according to claim 11, wherein a coating liquid inlet pipe for introducing the coating liquid is connected to a coating liquid inlet hole formed in the center portion of the lower manifold.

13. The slot die coater according to claim 12, wherein the shim plate comprises a first part serving as a base and at least four second parts extending from the first part, wherein the second parts are connected to the same side of the first part and extend in the same direction, and the second parts are composed of two side second parts positioned on both sides and inner second parts positioned between the side second parts, wherein the blocking part is positioned between the inner second parts.

14. The slot die coater according to claim 13, wherein the blocking part extends being spaced apart from the first part to define an open vent portion between the first part and the blocking part.

15. The slot die coater according to claim 14, wherein the coating liquid flows from the lower manifold to the upper manifold through the vent portion.

16. The slot die coater according to claim 14, wherein the end of the blocking part defining the vent portion has a rounded cross-sectional profile.

17. The slot die coater according to claim 14, wherein the length of the blocking part is greater than the size of the vent portion.

18. The slot die coater according to claim 12, wherein the blocking part is formed in a shape capable of covering at least a portion of the coating liquid inlet hole.

19. The slot die coater according to claim 10, wherein the orthogonal projection of the blocking part does not deviate from the orthogonal projection of the manifold.

20. The slot die coater according to claim 10, wherein the front end of the blocking part is positioned further behind than the front end of the manifold.
